(19) Europäisches Patentamt
European Patent Office
Office européen des brevets

(11) **EP 2 453 321 B1**

(12) **FASCICULE DE BREVET EUROPÉEN**

(45) Date de publication et mention
de la délivrance du brevet:
**09.09.2015 Bulletin 2015/37**

(51) Int Cl.:
***G04B 13/02*** *(2006.01)* ***F16H 55/08*** *(2006.01)*

(21) Numéro de dépôt: **10190884.6**

(22) Date de dépôt: **11.11.2010**

(54) **Profil d'engrenage à couple constant**

Zahnradgetriebeprofil mit konstantem Drehmoment

Constant torque gear contour

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(43) Date de publication de la demande:
**16.05.2012 Bulletin 2012/20**

(73) Titulaire: **ETA SA Manufacture Horlogère Suisse 2540 Grenchen (CH)**

(72) Inventeur: **Helfer, Jean-Luc 2502, Bienne (CH)**

(74) Mandataire: **Ravenel, Thierry Gérard Louis et al ICB
Ingénieurs Conseils en Brevets SA
Faubourg de l'Hôpital 3
2001 Neuchâtel (CH)**

(56) Documents cités:
**CH-A2- 699 679    DE-A1- 1 960 927**

• **R. NAVILLE: "Théorie et taillage des engrenages d'horlogerie", JOURNAL SUISSE D'HORLOGERIE, vol. 1/2, 1967, pages 51-57, XP001219311,**

**Description**

Domaine de l'invention

La présente invention concerne généralement les roues et les pignons constituant le rouage de la montre et plus particulièrement le profil des dents de ces roues et de ces pignons. La présente invention concerne également les mouvements horlogers ainsi que les pièces d'horlogerie comprenant des roues ou des pignons selon l'invention.

Etat de la technique

On sait que, dans une montre, les oscillations d'un balancier-spiral ne sont jamais parfaitement isochrones. Autrement dit, la durée des oscillations n'est pas totalement indépendante de leur amplitude. D'autre part, on sait que si l'angle d'oscillation total du balancier dépasse une valeur limite, la cheville du plateau de balancier peut buter contre le revers des cornes de fourchette, ce qui provoque une forte avance de la marche de la montre. On dit alors de cette dernière qu'elle rebat. On comprend de ce qui précède qu'il est désirable d'égaliser autant que possible l'amplitude des oscillations du balancier.

Les variations de l'amplitude des oscillations d'un balancier-spiral peuvent avoir de multiples causes. On sait bien notamment que l'intensité des frottements subis par les pivots de balancier augmente lorsque la montre est déplacée depuis la position horizontale vers la position verticale. D'autre part, il est bien connu que les variations dans la force transmise par l'échappement au balancier peuvent également se traduire par des variations d'amplitudes des oscillations du balancier.

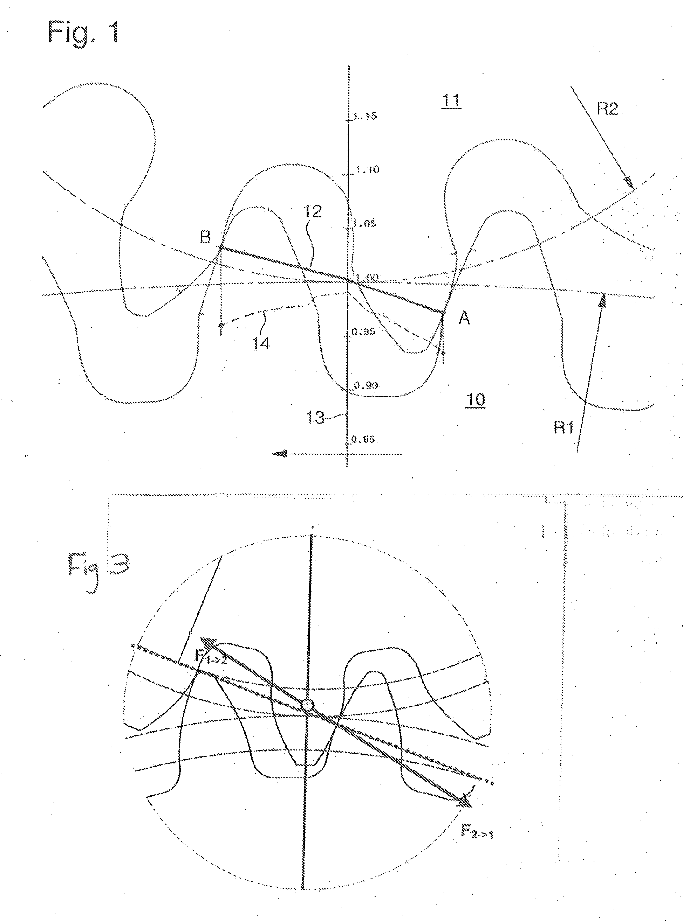

Divers facteurs peuvent être à l'origine de variations de la force transmise de l'échappement au balancier. Tout d'abord, la tension du ressort de barillet dépend du degré d'armage de ce dernier, ce qui se traduit normalement par une variation de la force transmise par le rouage en fonction de la réserve de marche. D'autre part, dans un engrenage, le point de contact entre les profils des flancs des deux dents qui se touchent se déplace radialement au cours d'une menée de dent, en montant vers la tête de la dent menante. Ce phénomène est illustré schématiquement dans la figure 1 annexée, qui montre l'engrènement d'une roue menante 10 à quatre-vingt-deux dents et de rayon primitif R1 avec une roue menée 11 à douze dents et de rayon primitif R2. La flèche indique le sens de la rotation. Le lieu géométrique des points de contact, appelé ligne d'engrènement 12, s'étend du point A au point B et traverse les deux cercles primitifs des dentures au voisinage de la ligne des centres 13 qui relie les centres des deux roues. Dans les engrenages connus, pendant que le point de contact de la roue menante avec la roue menée parcours la ligne d'engrènement, le rapport entre couple transmis et couple reçu n'est pas constant. Au contraire, au cours d'une menée de dent, ce rapport varie comme le montre par exemple la courbe 14 en regard de l'échelle verticale centrale de la figure 1.

Dans un mouvement d'horlogerie, c'est le rouage de finissage qui transmet la force depuis le barillet jusqu'à l'échappement. On sait qu'il s'agit d'un rouage multiplicatif. Ainsi, si à l'extrémité aval du rouage, la roue d'échappement avance normalement de quelques pas par seconde, la partie amont du rouage bouge à peine pendant ce même lapse de temps. Dans ces conditions, une seule menée de dent dans la partie amont du rouage se prolonge durant un nombre considérable d'oscillations du balancier. On comprendra donc que la variation dans le couple transmis au cours d'une menée de dent en amont de l'engrenage, dure largement assez de temps pour affecter l'amplitude des oscillations du balancier.

Finalement, la force transmise de l'échappement au balancier peut également varier d'une pièce d'horlogerie à l'autre, et cela même si ces pièces d'horlogerie sont théoriquement identiques. En effet, en raison du haut degré de miniaturisation propre à l'horlogerie, les tolérances de fabrication dans le positionnement des roues et des pignons d'une montre peuvent être suffisantes pour affecter sensiblement la force transmise par le rouage de la montre. La raison en est, qu'avec les profils d'engrenage connus, le couple transmis dans un engrenage varie considérablement dès que la distance entre les axes de rotation des deux roues dentées s'écarte de la valeur théorique. Un inconvénient majeur de cette sensibilité des engrenages aux variations d'entraxe est qu'il est nécessaire de mesurer durant un temps considérable l'amplitude des oscillations du balancier de chaque exemplaire d'un mouvement de montre, pour éliminer tout risque de rebattement.

Dans le domaine de l'horlogerie, il est connu de déterminer le profil des dents de roues dentées et des ailettes de pignon sur la base de courbes géométriques telles que : la cycloïde, l'épicycloïde, l'hypocycloïde ou la développante de cercle. Les roues et les pignons ainsi obtenus possèdent la caractéristique de permettre une « transmission proportionnelle » ou, autrement dit, de transmettre une vitesse de rotation qui demeure constante au cours d'une menée de dent. De plus, les roues et les pignons munis de dentures dont le profil est basé sur la développante de cercle possèdent la caractéristique supplémentaire de permettre une transmission proportionnelle, avec le même rapport de transmission, même quand la distance entre les axes des deux roues s'écarte de la valeur théorique.

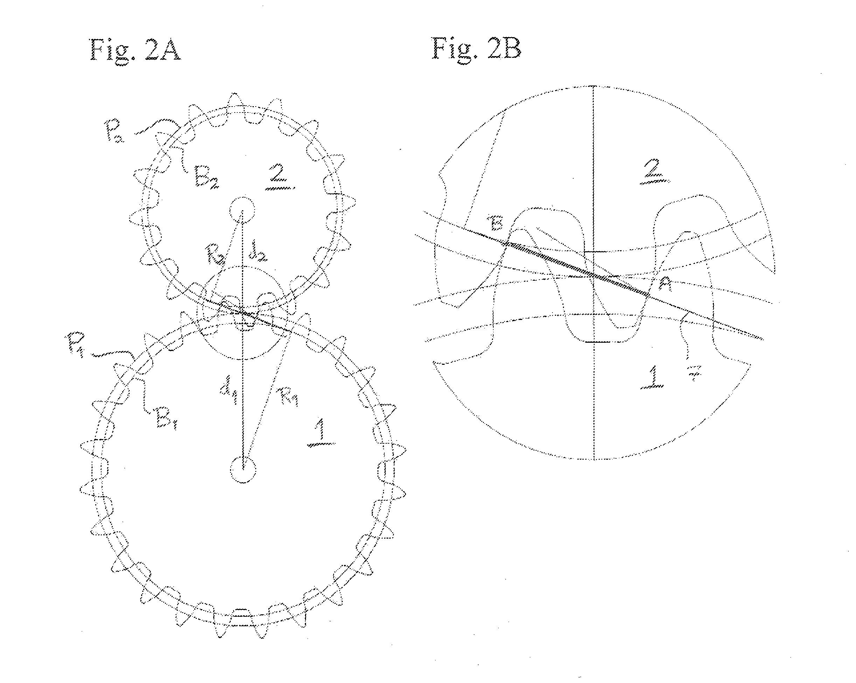

La figure 2A, qui représente un engrenage à développante de cercle, montre l'engrènement d'une roue 1 à vingt-quatre dents avec une roue 2 à seize dents. La figure 2A montre encore deux cercles concentriques superposés à chacune des deux roues. Le plus petit de ces deux cercles (respectivement référencés B1 et B2) est le cercle de base de la développante. Le cercle plus grand (respectivement référencés P1 et P2) est le cercle primitif. Le cercle primitif P1 de la roue 1 et le cercle primitif P2 de la roue 2 sont tangents par construction. De plus, par construction également, le rapport des rayons $d_1$ et $d_2$ des cercles primitifs est choisi égal au rapport de l'engrenage. A noter que, contrairement aux rayons $d_1$ et $d_2$ des cercles primitifs, les rayons $R_1$ et $R_2$ des deux cercles de base B1 et B2 ne dépendent pas de la distance entre le centre des deux roues. Toutefois, par définition, ils sont dans le même rapport que $d_1$ et $d_2$.

On a encore représenté sur les figures 2A et 2B la ligne d'engrènement 7. On peut observer que, dans l'exemple illustré, la ligne d'engrènement à la forme d'un segment de droite délimité par les deux points A et B. On peut remarquer de plus que, conformément à une caractéristique distinctive des engrenages à développante de cercle, la droite qui sous-tend la ligne d'engrènement 7 est exactement tangente aux deux cercles de base B1 et B2. Une autre caractéristique distinctive des engrenages à développante de cercle est que la normale commune aux flancs de deux dents au point de contact est toujours orientée dans la direction de la ligne d'engrènement (figure 2B). Une caractéristique avantageuse des engrenages à développante de cercle est que le rapport entre les vitesses angulaires des roues menantes et menées demeure constant et indépendant de l'entraxe entre les roues. En d'autre termes, comme nous l'avons déjà dit, l'engrenage à développante de cercle possède la caractéristique de permettre une transmission proportionnelle, avec le même rapport de transmission, même quand la distance entre les axes des deux roues s'écarte de la valeur nominale. On peut être tenté de conclure de ce qui précède que le couple transmis par un engrenage à développante de cercle reste constant au cours d'une menée de dent et quel que soit l'entraxe entre les deux roues. Toutefois, ce faisant, on néglige les forces de frottement qui sont inévitables dès que l'engrenage n'est plus à l'équilibre. En effet, la rotation des roues s'accompagne toujours d'un glissement des surfaces en contact l'une sur l'autre, et donc aussi de forces de frottements tangentes aux flancs des deux dents en contact. On comprendra que ces forces de frottements sont perpendiculaires à la normale commune aux flancs des deux dents au point de contact. Les forces de frottements ont donc pour effet de faire diverger la force transmise de la direction de la ligne d'engrènement. Si on se reporte maintenant à la figue 3 qui est semblable à la figure 2B, on peut voir les forces exercées par les flancs en contact l'un sur l'autre (ces forces sont représentées par deux flèches opposées qui ont leur origine au point de contact entre deux dents). On peut observer que la direction de ces forces n'est pas colinéaire avec la ligne d'engrènement. Une conséquence de la divergence entre force et ligne d'engrènement est que le couple transmis n'est pas constant au cours d'une menée de dent.

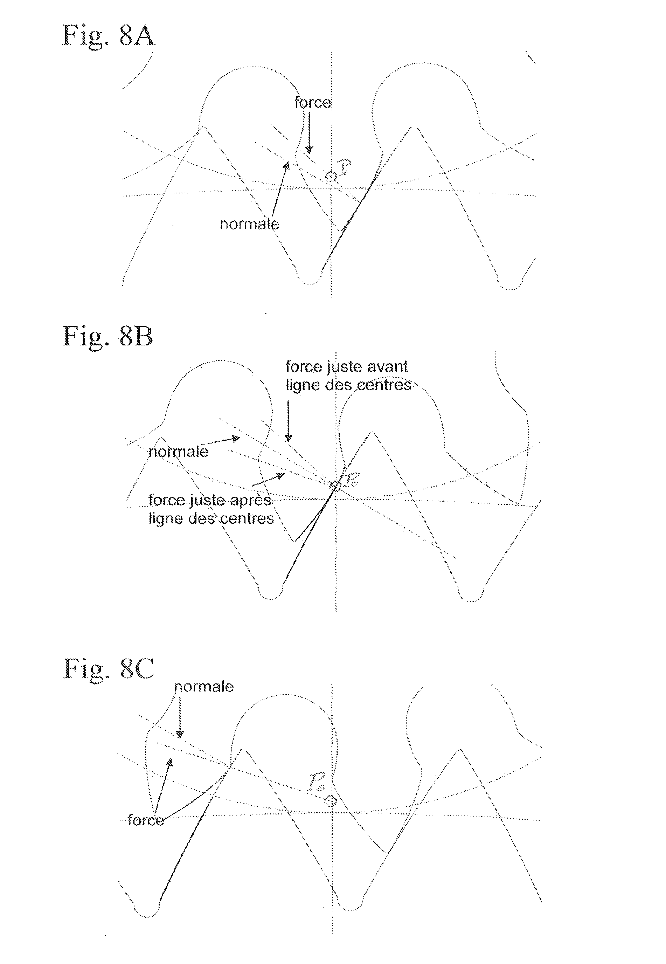

En effet, on peut montrer que pour transmettre un couple constant, il faut que, du début à la fin d'une menée de dent, la force au contact entre deux dents soit constamment orientée vers le même point de la ligne des centres (référencé $P_o$ sur les figures 8A, 8B et 8C). On comprendra donc de ce qui précède qu'un engrenage à développante de cercle ne peut pas transmettre un couple constant à moins que les dents en contact puissent glisser l'une sur l'autre sans frottement.

Bref exposé de l'invention

Un but de la présente invention est donc de remédier aux inconvénients de l'art antérieur en fournissant un profil d'engrenage ayant la propriété de transmettre un couple constant au cours d'une menée de dent, et cela même quand la distance entre les axes des deux roues s'écarte de la valeur théorique. La présente invention atteint ce but en fournissant d'une part un rouage conforme à la revendication 1 et comportant donc une première roue portant une première denture et une deuxième roue portant une deuxième denture, la première et la deuxième denture engrenant l'une avec l'autre, et d'autre part un mouvement horloger ou une pièce d'horlogerie comprenant un rouage selon l'invention.

Brèves description des figures

D'autres caractéristiques et avantages de la présente invention apparaîtront à la lecture de la description qui va suivre, donnée uniquement à titre d'exemple non limitatif, et faite en référence aux dessins annexés dans lesquels :

- la figure 1 est une vue schématique partielle d'un engrenage connu ;

- la figure 2A est une représentation schématique d'un engrenage à développante de cercle connu ;

- la figure 2B est une vue schématique partielle agrandie de l'engrenage à développante de cercle de la figure 2A ;

- la figure 3 est une vue schématique semblable à celle de la figure 2B et dans laquelle on a en outre représenté les forces exercées par les dents l'une sur l'autre au point de contact ;

- la figure 4 est une vue schématique partielle d'un engrenage conforme à la présente invention à l'instant où le point de contact entre deux dents coïncide avec la ligne des centres ;

- la figure 5 illustre la relation entre la position du point de contact entre deux dents au passage de la ligne des centres et le rendement moyen de l'engrenage ;

- la figure 6 montre l'angle d'inclinaison des flancs des dents au point de contact lors du passage de la ligne des centres ;

- la figure 7 illustre la construction des portions fonctionnelles de pied et de tête des flancs des dents des deux roues de l'engrenage ;

- les figures 8A, 8B et 8C correspondent à trois instantanés successifs montrant notamment que, dans un engrenage selon la présente invention, la direction de la force transmise coupe toujours la ligne des centres au même point ;

- la figure 9 est une vue schématique semblable à celle de la figure 8B et montrant la ligne d'engrènement formée de deux segments rectilignes ;

- les figures 10A, 10B et 10C sont trois vues schématiques partielles montrant respectivement l'engrènement d'une même paire de roues placées à trois distances l'un de l'autre ;

- la figure 11 est un graphique comprenant trois courbes représentant respectivement la variation du couple transmis au cours d'une menée de dent dans les trois cas de figure représenté dans les figures 10A, 10B et 10C ;

- les figures 12A et 12B montre un engrenage selon un deuxième mode de réalisation de la présente invention à deux instants différents durant une menée de dent.

Description détaillée d'un mode de réalisation exemplaire

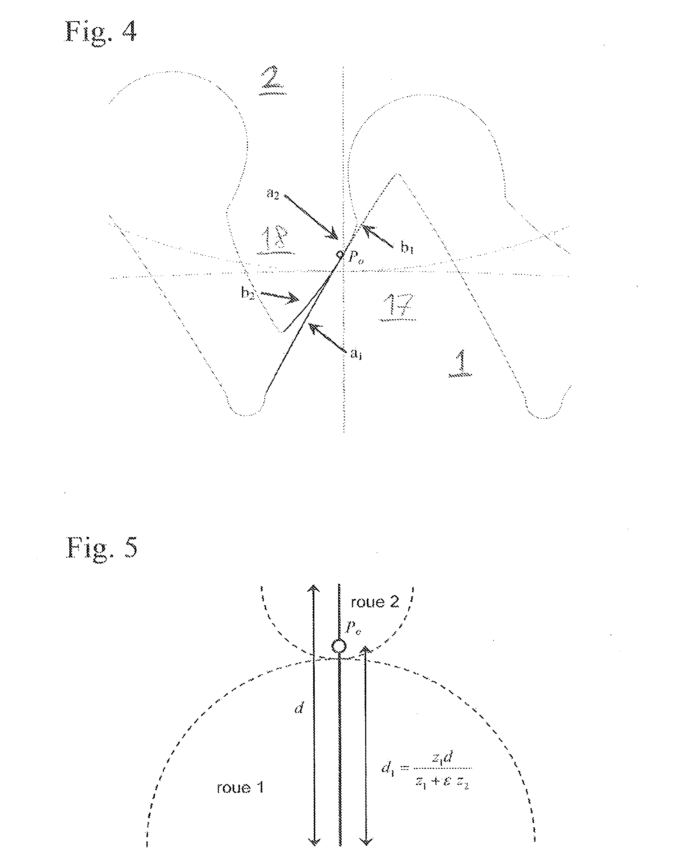

La figure 4 est une vue schématique partielle d'un engrenage conforme la présente invention à l'instant où le point de contact entre deux dents 17, 18 (référencé $P_0$) se trouve sur la ligne des centres. Les pages qui suivent sont consacrées à la description succincte d'une démarche pour réaliser l'engrenage de la figure 4.

La démarche qui va être décrite a son point de départ à un moment où la valeur de certains paramètres est déjà connue (ou choisie). Ces paramètres sont les suivants :

- l'entraxe nominal « d » ; ;
- la tolérance d'entraxes, ou autrement dit l'intervalle [dmin, dmax] à l'intérieur duquel les profils des dents doivent donner un couple constant ;
- les nombres de dents « $z_1$ » et « $z_2$ » des deux roues.
- le coefficient de frottement « $\mu$ » au contact entre deux dents.

1. La première étape de la démarche est de fixer le rendement « s » que doit avoir l'engrenage.
Si on désigne par $M_{1\text{->}2}$ le couple exercé par la roue 1 sur la roue 2 et par $M_{2\text{->}1}$ la réaction de la roue 2 sur la roue 1, le travail (l'énergie) fourni par la roue 1 à la roue 2 au cours d'une menée de dent vaut $2\pi/z_1 M_{1\text{->}2}$ et l'énergie reçue par la roue 2 vaut $2\pi/z_2 M_{2\text{->}1}$. Dans ces conditions, si le rendement moyen vaut $\varepsilon$, alors on a

$2\pi/z_2 M_{2\text{->}1} = \varepsilon\, 2\pi/z_1 M_{1\text{->}2}$, ou de manière équivalente $\varepsilon = \dfrac{M_{1\rightarrow 2}}{M_{2\rightarrow 1}} \dfrac{z_1}{z_2}$ .

Pour construire le profil selon l'invention, il est nécessaire de choisir le rendement moyen « $\varepsilon$ ». On choisi de préférence une valeur de $\varepsilon$ assez proche de 1, par exemple dans l'intervalle [0,9 ; 0,99].
Si on désigne par $d_1$ la distance entre le centre de la roue 1 et $P_0$, l'intersection entre la ligne des centres et la ligne d'engrènement, et par $d_2$, la distance entre le centre de la roue 2 et $P_0$, on comprendra que $\dfrac{M_{1\rightarrow 2}}{M_{2\rightarrow 1}} = \dfrac{d_2}{d_1}$ .

En effet, d'une part, la force $F_{1\text{->}2}$ exercée par la roue 1 sur la roue 2 est égale à la force de réaction $F_{2\text{->}1}$ de la roue 2 sur la roue 1, et d'autre part, à l'instant où le point de contact est sur la ligne des centres, on a : $M_{2\text{->}1}$

$= d_1 \sin\beta \; F_{2\to1}$ et $M_{1\to2} = d_2 \sin\beta \; F_{1\to2}$ (où $\beta$ est l'angle que fait la force avec la ligne des centres).

La position du point de contact $P_0$ sur la ligne des centres dépend donc de la valeur du rendement « $\varepsilon$ » au

travers de la relation $\dfrac{d_2}{d_1} = \varepsilon \dfrac{z_2}{z_1}$ avec $d_1 + d_2 = d$. La figure 5 illustre graphiquement cette relation.

2. La deuxième étape de la démarche est de choisir un angle d'inclinaison des dents.

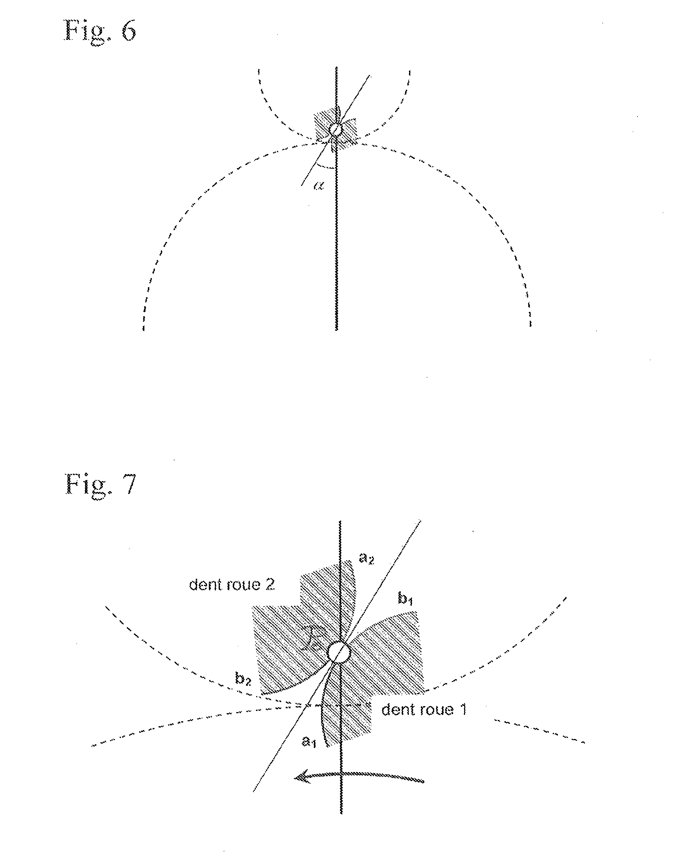

Comme dans le cas des profils d'engrenage connus, il faut choisir l'inclinaison des dents. Comme illustré par la figure 6, dans le présent exemple, on choisit l'inclinaison des flancs des dents au point de contact $P_0$ sur la ligne des centres. Cette inclinaison peut s'exprimer en termes de l'angle a entre la tangente à une dent en $P_0$ et la ligne des centres. Cet angle est de préférence choisi entre 10 ° et 30 °.

3. La troisième étape de la démarche est de calculer les rayons $R_1$ et $R_2$ des cercles de base.

Dans le présent exemple, la partie fonctionnelle (ou utile) du flanc de chaque dent est formée de deux portions « a » et « b » ; une portion utile de tête et une portion utile de pied. Comme on peut le voir sur la figure 7, Les portions de pied et de tête se rejoignent au point $P_0$ commun aux deux dents en contact. La partie fonctionnelle du flanc de la dent de la roue 1 est formée d'une portion utile de pied référencée « $a_1$ » et d'une portion utile de tête référencée « $b_1$ ». De même, la partie fonctionnelle du flanc de la dent de la roue 2 est formée d'une portion utile de pied référencée « $a_2$ » et d'une portion utile de tête référencée « $b_2$ ».

En se référant encore à la figure 4 en plus de la figure 7, on comprendra que c'est d'abord la portion $a_1$ de pied du flanc de la dent de la roue menante (roue 1) qui pousse la portion $b_2$ de tête du flanc de la dent de la roue menée (roue 2). Puis c'est la portion $b_1$ de tête qui pousse la portion $a_2$ de pied. De plus, la force de frottement « $\mu$ », entre les flancs des deux dents en contact, change de sens lorsque le point de contact passe par la ligne des centres ou, autrement dit, la force de frottement change de sens au point $P_0$. Ainsi, on considère que le coefficient de frottement « $\mu$ » est négatif avant le franchissement de la ligne des centres (frottement entre les portions $a_1$ et $b_2$) et qu'il est positif après (frottement entre les portions $b_1$ et $a_2$).

Les rayons de base $R_1$ et $R_2$ des deux roues sont donnés par les formules suivantes :

$$R_1 = d_1 \cos(\alpha - \operatorname{atan}\mu)$$

$$R_2 = d_2 \cos(\alpha - \operatorname{atan}\mu)$$

Une dent sera donc formée de deux portions de profils différents, comme cela se fait avec les cycloïdes par exemple. En effet, comme le coefficient de frottement change de signe en $P_0$, on aura deux rayons de base R(a) et R(b) pour chaque dent. Un rayon de base pour la partie a et un rayon de base pour la partie b du flanc de la dent. Selon la présente invention, les profils des deux portions a et b sont tangents au point $P_0$.

4. La quatrième étape de la démarche est de calculer les profils des portions a et b de chaque dent.

Les parties a et b des dents de chaque roue sont calculées par les formules suivantes :

$$x(u) = R\left[ \cos\left( \frac{1}{\mu}\ln(1 - \mu\,u) \right) - u\sin\left( \frac{1}{\mu}\ln(1 - \mu\,u) \right) \right]$$

$$y(u) = R\left[ \sin\left( \frac{1}{\mu}\ln(1 - \mu\,u) \right) + u\cos\left( \frac{1}{\mu}\ln(1 - \mu\,u) \right) \right]$$

On peut noter que les deux relations ci-dessus ont pour conséquence que :

$$x^2 + y^2 = R^2\left(1 + u^2\right).$$

Dans les formules ci-dessus, le rayon de base $R$ est déterminé comme expliqué ci-dessus. D'autre part, $u$ est un paramètre qui varie dans l'intervalle [0, 1/ $\mu$]. En variant $u$, on parcourt la courbe. Pour chaque portion, on détermine la valeur initiale ($u_{ini}$) de la variable $u$ de manière à ce que la coordonnée radiale correspondante

soit égale à $d_1$ (pour la roue 1) et à $d_2$ (pour la roue 2), ou autrement dit, pour que la valeur $u_{ini}$ corresponde au point $P_0$. Comme on a pour chaque portion de dent $a_1$, $b_1$, $a_2$ et $b_2$, une valeur de $R$ différente, on aura également pour chaque dent et pour chaque portion a ou b, une variable initiale $u_{ini}$ différente. Chaque portion a ou b de chaque dent 1 ou 2 est prolongée à partir de $P_0$ en faisant varier u depuis $u_{ini}$ de manière croissante ou décroissante, pour que le profil s'étende « dans la bonne direction » (c'est-à-dire coordonnées radiales décroissantes pour les portions a, et coordonnées radiales croissantes pour les portions b).

De plus, on remarquera qu'il faut encore effectuer une rotation des profils obtenus par les formules x et y ci-dessus, afin d'amener chaque portion a ou b de profil de chaque roue 1 ou 2 dans la position où le point de contact est sur la ligne des centres.

5. La cinquième étape de la démarche est de déterminer l'étendue des portions a et b.

En faisant varier la variable u depuis la valeur initiale $u_{ini}$ dans l'intervalle $[0, 1 / \mu]$, on peut prolonger les portions a et b des profils : jusqu'à l'infini pour les portions b (ce qui correspond à u tendant vers $1 \mu$), et jusqu'au rayon de base R pour les portions a (ce qui correspond à la limite u = 0). Les valeurs $u_{fin}$ de la variable u déterminant l'étendue de ces portions seront simplement choisies de façon à ce que, compte-tenu de la tolérance d'entraxes choisie, le contact entre les deux dents se fasse toujours sur les portions fonctionnelles ou utiles a et b du flanc d'une dent quel que soit l'entraxe. L'homme du métier veillera également à ce que le profil d'une dent n'empiète pas sur le profil de la dent suivante de la roue. Pour ce faire, il pourra jouer aussi bien sur le choix de l'angle a d'inclinaison des flancs des dents, que sur celui du rendement « ε » de l'engrenage.

6. La sixième étape de la démarche est d'ajouter des pieds et des têtes aux dents.

Les formules données plus haut ne décrivent que les portions fonctionnelles du profil des dents, c'est-à-dire la zone où un contact avec une autre dent peut avoir lieu. Il faut toutefois compléter la denture en « fermant » chaque dent par l'ajout d'une tête « non fonctionnelles », et en ajoutant également des pieds qui se rejoignent entre deux dents. Lorsqu'on ajoute ces parties non fonctionnelles, il est important d'éviter qu'elles n'interfèrent avec les zones fonctionnelles pendant l'engrènement.

Exemple numérique :

- entraxe nominal d = 2.958 mm ;
- intervalle d'entraxes [dmin, dmax] = [2.913 mm, 2.968 mm] ;
- nombres de dents des deux roues, z1 = 82 et z2 = 12 ;
- coefficient de frottement $\mu$ = 0.2 ;
- fraction de couple à transmettre : ε = 0.966 ;
- angle d'inclinaison : a = 30.5°.

Il découle des valeurs ci-dessus que :

- pour la portion $a_1$
  R = 1.932mm, $u_{ini}$ = 0.894 et $u_{fin}$ = 0.821 ;
- Pour la portion $a_2$
  R = 0.346mm, $u_{ini}$ = 0.348 et $u_{fin}$ = 0.013 ;
- Pour la portion $b_1$
  R = 2.447mm, $u_{ini}$ = 0.348 et $u_{fin}$ = 0.408 ;
- Pour la portion $b_2$
  R = 0.273mm, $u_{ini}$ = 0.894 et $u_{fin}$ = 1.162 ;

Les figures 8A, 8B et 8C sont trois instantanés successifs durant une menée de dents dans un engrenage selon la présente invention. La figure 8A correspond à un instant où le point de contact se trouve avant la ligne des centres, alors que la figure 8C correspond à un instant où le point de contact se trouve après la ligne des centres. Entre les deux, la figure 8B montre un point de contact sur la ligne des centres. Comme l'illustre les figures 8A et 8C, la force de réaction des surfaces l'une sur l'autre ne leur est pas normale, mais oblique. De plus, comme le sens du glissement des surfaces l'une sur l'autre est inversé de part et d'autre du point d'engrènement, la déviation de la direction de la force par rapport à la normale est également en sens contraire de part et d'autre du point d'engrènement. Les figures 8A, 8B et 8C permettent encore de vérifier que la direction de force au point de contact vise le point d'intersection $P_0$ durant toute la période d'engrènement des deux flancs. Cette caractéristique est une condition nécessaire pour permettre d'avoir un couple transmis constant. Comme on l'a dit, un avantage des profils d'engrenage selon la présente invention est que le couple est toujours transmis de manière sensiblement constante, même si la distance entre les centres des deux roues diffère de la norme théorique.

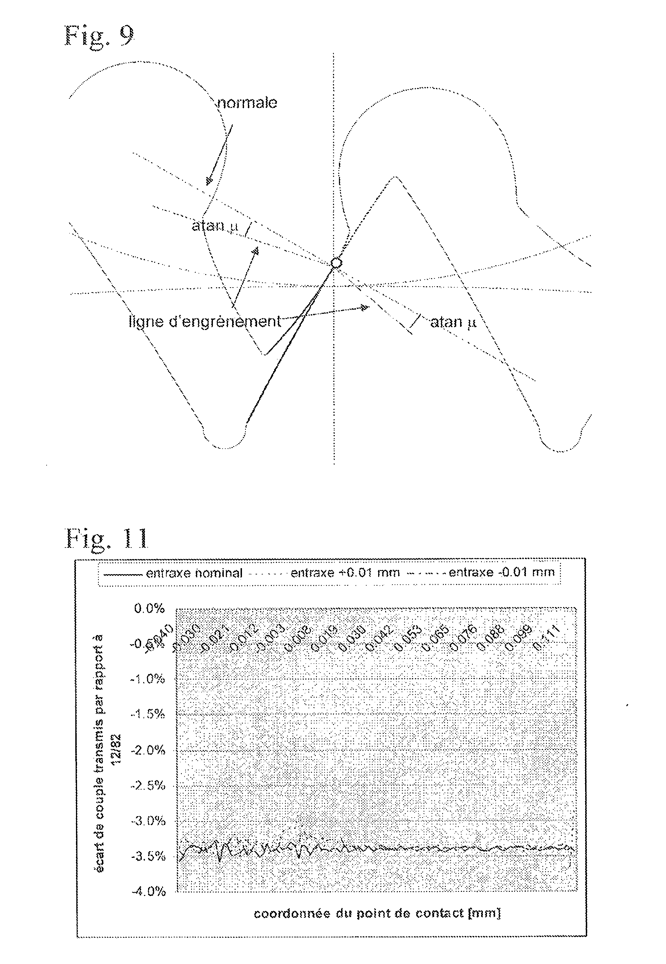

Comme la figure 8B, la figure 9 correspond à l'instant où le point de contact se trouve exactement sur la ligne des centres. Sur la figure 9 on a indiqué par un trait interrompu la ligne d'engrènement. On peut voir que, contrairement à ce qui était le cas avec la développante de cercle, dans un engrenage selon la présente invention, la ligne d'engrènement est formée de deux segments rectilignes qui se rejoignent au point $P_0$. On comprendra de plus que la direction de la ligne d'engrènement correspond en tout point à la direction de la force. Enfin précisons que l'angle entre la ligne d'engrènement et la normale commune aux deux flancs en contact est égal à l'arc tangente du coefficient de frottement.

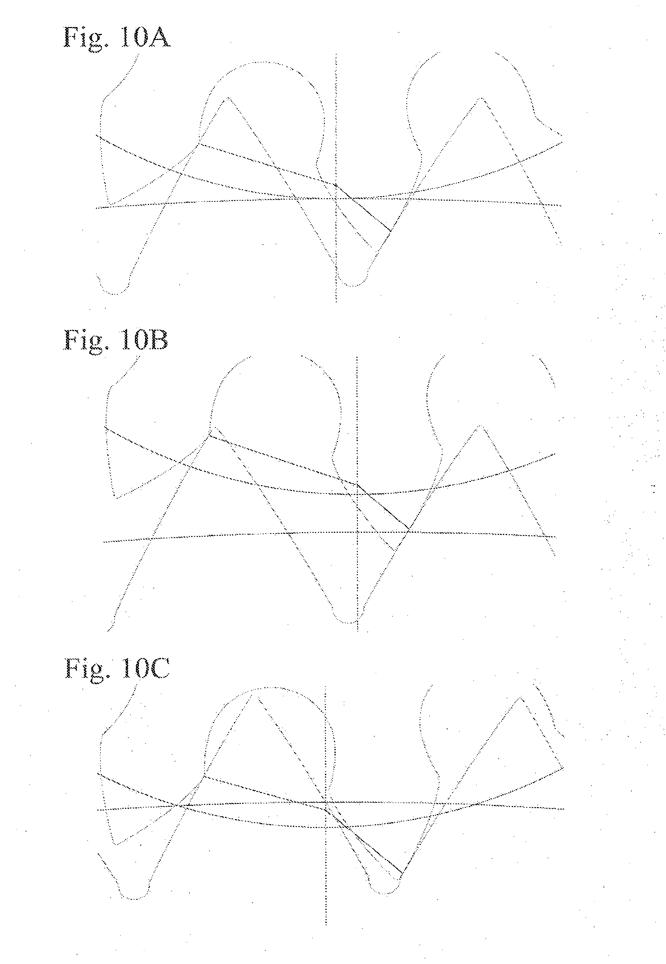

Les figures 10A, 10B et 10C comprennent trois vues schématiques partielles montrant respectivement l'engrènement d'une même paire de roues placées à trois distances l'un de l'autre. Quant au graphique de la figure 11, il montre la variation du couple transmis au cours d'une menée de dent pour trois entraxes différents correspondant respectivement aux figures 10A, 10B et 10C. La courbe en trait continu correspond à l'entraxe nominal et donc à la situation illustrée par la figure 10A, la courbe pointillée correspond à la situation illustrée par la figure 10B, et enfin, la courbe alternant traits et points correspond à la situation de la figure 10C.

Dans l'engrenage représenté à la figure 10A, la distance entre les centres des deux roues correspond à la norme théorique. Dans ce cas « idéal », au passage de la ligne des centres, le point de contact entre les dents se situe exactement à la frontière entre la portion a et la portion b du flanc de chacune des roues. Dans ce cas, comme le montre la courbe en trait continu de la figure 11, le couple transmis est quasi constant.

Dans l'engrenage de la figure 10B la distance entre les centres des deux roues est plus grande la norme théorique. Dans l'engrenage de la figure 10C, la distance entre les centres des deux roues est plus petite que la distance normale. Comme le montre la courbe de la figure 11 formée d'un chaîne de points, ainsi que celle formée d'une alternance de traits et de points, le couple transmis reste quasi constant lorsque l'entraxe s'écarte de la valeur nominale, sauf au alentour du passage de la ligne des centres. En effet, lorsque la distance entre roue ne correspond pas à l'entraxe nominal, les deux points de transition entre portions de pied et portions de tête de deux dents en contact ne se rencontrent jamais exactement. Dans ces conditions, le passage du point de contact d'une portion utile à l'autre ne se fait pas simultanément pour les deux dents. Ce défaut de simultanéité entraîne une variation transitoire du couple transmis.

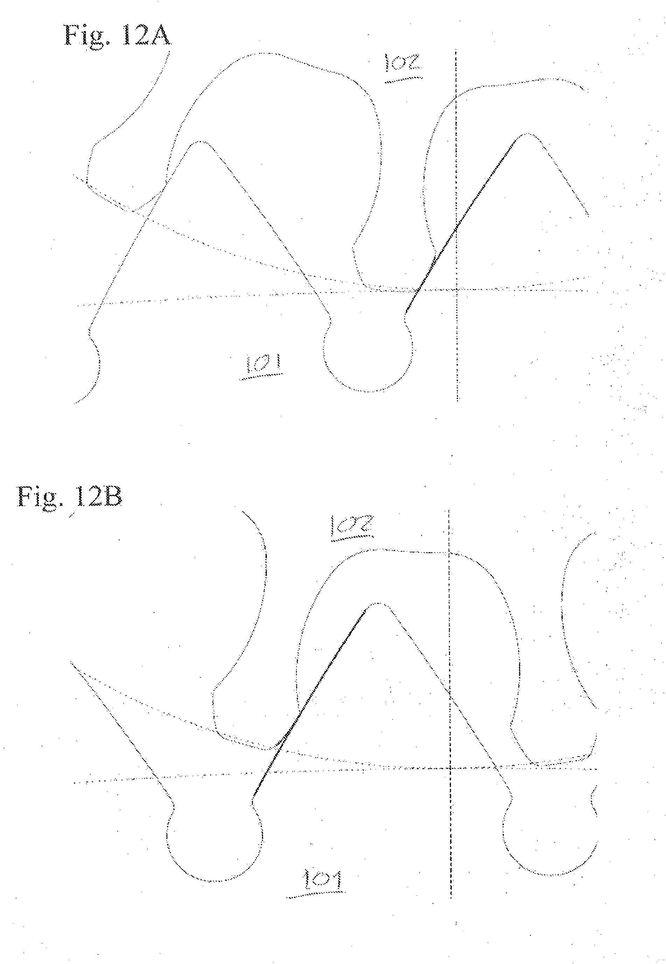

Les figures 12A et 12B sont deux instantanés successifs durant une menée de dent dans un engrenage selon un deuxième mode de réalisation de la présente invention. Selon ce deuxième mode de réalisation, la partie fonctionnelle du flanc d'une dent ne comporte qu'une portion de profil et non pas deux comme dans le mode de réalisation illustré par les figures 7 à 11.

En supposant que la roue menante est la roue 101 et que la roue menée et la roue 102, on peut voir sur les figures 12A et 12B que deux dents n'entrent en contact qu'après la ligne des centres. Dans ces conditions, si on garde les mêmes conventions adoptées plus haut, on peut dire que le coefficient de frottement « μ » est toujours positifs. En effet, le contact entre les flancs se fait toujours après la ligne des centres (on comprendra toutefois que si les roues tournaient dans l'autre sens, la roue 102 étant la roue menante, et la roue 101, la roue menée, alors le contact entre les flancs se produirait toujours avant la lignes des centres, et non pas après).

Un avantage du deuxième mode de réalisation de la présent invention qui vient d'être décrit est qu'on évite les variations transitoires du couple transmis, qui sont liées au défaut de simultanéité décrit plus haut en relation avec le premier mode de réalisation de l'invention.

L'invention proposée permet théoriquement d'atteindre des variations parfaitement nulles (0%). Toutefois, on s'attend tout de même à observer une variation lorsque l'entraxe n'est pas normal ou parce que le coefficient de frottement peut varier d'une pièce à l'autre ou au cours du temps. Quoi qu'il en soit, la demanderesse à pu calculer que ces variation sont nettement plus faibles qu'avec les profils actuels.

**Revendications**

1. Rouage comportant une première roue portant une première denture et une deuxième roue portant une deuxième denture, la première et la deuxième denture engrenant l'une avec l'autre, les points de contact formant une ligne d'engrènement (12), une portion fonctionnelle d'un flanc de chaque dent de la première denture présentant un premier profil obéissant à la double formule paramétrique (en coordonnées cartésiennes):

$$x_1(u) = R_1\left[\cos\left(\frac{1}{\mu}\ln(1-\mu u)\right) - u\sin\left(\frac{1}{\mu}\ln(1-\mu u)\right)\right]$$

$$y_1(u) = R_1\left[\sin\left(\frac{1}{\mu}\ln(1-\mu\,u)\right) + u\cos\left(\frac{1}{\mu}\ln(1-\mu\,u)\right)\right]$$

où $R_1 = d_1\cos(\alpha\text{-atan}\;\mu)$ ; $\alpha$ étant l'inclinaison des flancs des dents au point de contact sur la ligne reliant les centres de la première et de la deuxième roues, appelée ligne des centres, et $d_1$ étant la distance entre le centre de la première roue et l'intersection entre la ligne des centres et la ligne d'engrènement ;
et une portion fonctionnelle d'un flanc de chaque dent de la deuxième denture présentant un deuxième profil obéissant à la double formule paramétrique (en coordonnées cartésiennes) :

$$x_2(u) = R_2\left[\cos\left(\frac{1}{\mu}\ln(1-\mu\,u)\right) - u\sin\left(\frac{1}{\mu}\ln(1-\mu\,u)\right)\right]$$

$$y_2(u) = R_2\left[\sin\left(\frac{1}{\mu}\ln(1-\mu\,u)\right) + u\cos\left(\frac{1}{\mu}\ln(1-\mu\,u)\right)\right]$$

où $R_2 = d_2\cos(\alpha\text{-atan}\;\mu)$ ; $d_2$ étant la distance entre le centre de la deuxième roue et l'intersection entre la ligne des centres et la ligne d'engrènement ;
$\mu$ étant un paramètre qui correspond au coefficient de frottement au contact entre la portion fonctionnelle d'un flanc d'une dent de la première denture et la portion fonctionnelle d'un flanc d'une dent de la deuxième denture, $\mu$ pouvant prendre des valeurs entre 0,05 et 0,5, et $u$ étant une variable qui varie dans l'intervalle [0, 1/ $\mu$], de sorte qu'en variant $u$, on parcourt le premier et le deuxième profil.

2. Rouage selon la revendication 1, dans lequel une première portion fonctionnelle et une seconde portion fonctionnelle du dit flanc de chaque dent de la première denture sont contigües et présentent chacune un profil obéissant à la double formule paramétrique :

$$x_1(u) = R_1\left[\cos\left(\frac{1}{\mu}\ln(1-\mu\,u)\right) - u\sin\left(\frac{1}{\mu}\ln(1-\mu\,u)\right)\right]$$

$$y_1(u) = R_1\left[\sin\left(\frac{1}{\mu}\ln(1-\mu\,u)\right) + u\cos\left(\frac{1}{\mu}\ln(1-\mu\,u)\right)\right]$$

le paramètre $d_1$ étant le même pour la première et la seconde portion, $\mu$ étant compté positif pour la première portion et négatif pour la seconde ; et dans lequel une première portion fonctionnelle et une seconde portion fonctionnelle du dit flanc de chaque dent de la deuxième denture sont contigües et présentent chacune un profil obéissant à la double formule paramétrique :

$$x_2(u) = R_2\left[\cos\left(\frac{1}{\mu}\ln(1-\mu\,u)\right) - u\sin\left(\frac{1}{\mu}\ln(1-\mu\,u)\right)\right]$$

$$y_2(u) = R_2\left[\sin\left(\frac{1}{\mu}\ln(1-\mu\,u)\right) + u\cos\left(\frac{1}{\mu}\ln(1-\mu\,u)\right)\right]$$

le paramètre $d_2$ étant le même pour la première et la seconde portion, $\mu$ étant compté positif pour la première portion et négatif pour la seconde, le paramètre $\alpha$ et le module de $\mu$ étant les mêmes pour les quatre portions fonctionnelles.

3.  Rouage selon la revendication 1, dans laquelle ladite portion fonctionnelle d'un flanc de chaque dent de la première denture contient entièrement la partie fonctionnelle du dit flanc de chaque dent de la première denture.

4.  Rouage selon la revendication 3, dans laquelle ladite portion fonctionnelle d'un flanc de chaque dent de la deuxième denture contient entièrement la partie fonctionnelle du dit flanc de chaque dent de la deuxième denture.

**Patentansprüche**

1.  Gangwerk, das ein erstes Rad, das eine erste Zahnung trägt, und ein zweites Rad, das eine zweite Zahnung trägt, umfasst, wobei die erste und die zweite Zahnung miteinander kämmen, wobei die Kontaktpunkte eine Kämmlinie (12) bilden, wobei ein funktionaler Abschnitt einer Flanke jedes Zahns der ersten Zahnung ein erstes Profil aufweist, das der folgenden Doppelparameterformel (in kartesischen Koordinaten) gehorcht:

$$x_1(u) = R_1\left[\cos\left(\frac{1}{\mu}\ln(1-\mu u)\right) - u\sin\left(\frac{1}{\mu}\ln(1-\mu u)\right)\right]$$

$$y_1(u) = R_1\left[\sin\left(\frac{1}{\mu}\ln(1-\mu u)\right) + u\cos\left(\frac{1}{\mu}\ln(1-\mu u)\right)\right]$$

wobei $R_1 = d_1\cos(\alpha - \mathrm{atan}\,\mu)$; $\alpha$ die Neigung der Flanken der Zähne am Kontaktpunkt zu der Linie ist, die die Zentren des ersten und des zweiten Rades verbindet und Zentrumslinie genannt wird, und $d_1$ der Abstand zwischen dem Zentrum des ersten Rades und dem Schnittpunkt zwischen der Zentrumslinie und der Kämmlinie ist;
und ein funktionaler Abschnitt einer Flanke jedes Zahns der zweiten Zahnung ein zweites Profil aufweist, das der folgenden Doppelparameterformel (in kartesischen Koordinaten) gehorcht:

$$x_2(u) = R_2\left[\cos\left(\frac{1}{\mu}\ln(1-\mu u)\right) - u\sin\left(\frac{1}{\mu}\ln(1-\mu u)\right)\right]$$

$$y_2(u) = R_2\left[\sin\left(\frac{1}{\mu}\ln(1-\mu u)\right) + u\cos\left(\frac{1}{\mu}\ln(1-\mu u)\right)\right]$$

wobei $R_2 = d_2\cos(\alpha - \mathrm{atan}\,\mu)$; $d_2$ der Abstand zwischen dem Zentrum des zweiten Rades und dem Schnittpunkt zwischen der Zentrumslinie und der Kämmlinie ist;
$\mu$ ein Parameter ist, der dem Reibungskoeffizienten am Kontakt zwischen dem funktionalen Abschnitt einer Flanke eines Zahns der ersten Zahnung und dem funktionalen Abschnitt einer Flanke eines Zahns der zweiten Zahnung entspricht, wobei $\mu$ Werte im Bereich von 0,05 bis 0,5 annehmen kann, und u eine Variable ist, die sich im Intervall $[0, 1/\mu]$ ändert, derart, dass bei einer Änderung von u das erste und das zweite Profil durchlaufen werden.

2.  Gangwerk nach Anspruch 1, wobei ein erster funktionaler Abschnitt und ein zweiter funktionale Abschnitt der Flanke jedes Zahns der ersten Zahnung aneinander grenzen und jeweils ein Profil aufweisen, das der folgenden Doppel- parameterformel gehorcht:

$$x_1(u) = R_1\left[\cos\left(\frac{1}{\mu}\ln(1-\mu u)\right) - u\sin\left(\frac{1}{\mu}\ln(1-\mu u)\right)\right]$$

$$y_1(u) = R_1\left[\sin\left(\frac{1}{\mu}\ln(1-\mu u)\right) + u\cos\left(\frac{1}{\mu}\ln(1-\mu u)\right)\right]$$

wobei der Parameter $d_1$ für den ersten und den zweiten Abschnitt gleich ist, $\mu$ für den ersten Abschnitt positiv und für den zweiten Abschnitt negativ gezählt wird; und wobei ein erster funktionaler Abschnitt und ein zweiter funktionale Abschnitt der Flanke jedes Zahns der zweiten Zahnung aneinander grenzen und jeweils ein Profil aufweisen, das der folgenden Doppelparameterformel gehorcht:

$$x_2(u) = R_2\left[\cos\left(\frac{1}{\mu}\ln(1-\mu u)\right) - u\sin\left(\frac{1}{\mu}\ln(1-\mu u)\right)\right]$$

$$y_2(u) = R_2\left[\sin\left(\frac{1}{\mu}\ln(1-\mu u)\right) + u\cos\left(\frac{1}{\mu}\ln(1-\mu u)\right)\right]$$

wobei der Parameter $d_2$ für den ersten und den zweiten Abschnitt gleich ist, $\mu$ für den ersten Abschnitt positiv und für den zweiten Abschnitt negativ gezählt wird, wobei der Parameter $\alpha$ und der Betrag von $\mu$ für die vier funktionalen Abschnitt gleich sind.

3. Gangwerk nach Anspruch 1, wobei der funktionale Abschnitt einer Flanke jedes Zahns der ersten Zahnung den funktionalen Teil der Flanke jedes Zahns der ersten Zahnung vollständig enthält.

4. Gangwerk nach Anspruch 3, wobei der funktionale Abschnitt einer Flanke jedes Zahns der zweiten Zahnung den funktionalen Teil der Flanke jedes Zahns der zweiten Zahnung vollständig enthält.

**Claims**

1. Gear train comprising a first wheel with a first teeth and a second wheel with a second teeth, the first teeth meshing with the second teeth, the contact points forming a line of meshing (12), a functional portion of an edge of each tooth of the first teeth having a first profile which complies with the parametric double formula (in Cartesian coordinates):

$$x_1(u) = R_1\left[\cos\left(\frac{1}{\mu}\ln(1-\mu u)\right) - u\sin\left(\frac{1}{\mu}\ln(1-\mu u)\right)\right]$$

$$y_1(u) = R_1\left[\sin\left(\frac{1}{\mu}\ln(1-\mu u)\right) + u\cos\left(\frac{1}{\mu}\ln(1-\mu u)\right)\right]$$

where $R_1 = d_1 \cos(\alpha - \text{atan } \mu)$, a being the angle of inclination of edges of the teeth at the contact point on the line which connects the centres of the first and second wheels, termed line of the centres, and $d_1$ being the distance between the centre of the first wheel and the intersection between the line of the centres and the meshing line; and a functional portion of an edge of each tooth of the second teeth having a second profile which complies with the parametric double formula (in Cartesian coordinates):

$$x_2(u) = R_2\left[\cos\left(\frac{1}{\mu}\ln(1-\mu u)\right) - u\sin\left(\frac{1}{\mu}\ln(1-\mu u)\right)\right]$$

$$y_2(u) = R_2\left[\sin\left(\frac{1}{\mu}\ln(1-\mu u)\right) + u\cos\left(\frac{1}{\mu}\ln(1-\mu u)\right)\right]$$

where $R_2 = d_2 \cos(\alpha - \operatorname{atan}\mu)$, $d_2$ being the distance between the centre of the second wheel and the intersection between the line of the centres and the meshing line;

$\mu$ being a parameter which corresponds to the coefficient of friction at the contact between the functional portion of an edge of a tooth of the first teeth and the functional portion of an edge of a tooth of the second wheel, $\mu$ being able to take values between 0.05 and 0.5, and $u$ being a variable which varies in the interval $(0, 1/\mu)$ such that by varying u, the first and second profiles are passed through.

2. Gear train according to claim 1, in which a first functional portion and a second functional portion of said edge of each tooth of the first teeth are contiguous and each have a profile which complies with the parametric double formula:

$$x_1(u) = R_1\left[\cos\left(\frac{1}{\mu}\ln(1-\mu u)\right) - u\sin\left(\frac{1}{\mu}\ln(1-\mu u)\right)\right]$$

$$y_1(u) = R_1\left[\sin\left(\frac{1}{\mu}\ln(1-\mu u)\right) + u\cos\left(\frac{1}{\mu}\ln(1-\mu u)\right)\right]$$

the parameter $d_1$ being the same for the first and the second portion, $\mu$ being considered as positive for the first portion and negative for the second, and in which a first functional portion and a second functional portion of said edge of each tooth of the second teeth are contiguous and each have a profile which complies with the parametric double formula:

$$x_2(u) = R_2\left[\cos\left(\frac{1}{\mu}\ln(1-\mu u)\right) - u\sin\left(\frac{1}{\mu}\ln(1-\mu u)\right)\right]$$

$$y_2(u) = R_2\left[\sin\left(\frac{1}{\mu}\ln(1-\mu u)\right) + u\cos\left(\frac{1}{\mu}\ln(1-\mu u)\right)\right]$$

the parameter $d_2$ being the same for the first and the second portion, $\mu$ being considered as positive for the first portion and negative for the second, the parameters a and the modulus of $\mu$ being the same for the four functional portion.

3. Gear train according to claim 1, in which said functional portion of an edge of each tooth of the first teeth contains completely the functional part of said edge of each tooth of the first teeth.

4. Gear train according to claim 3, in which said functional portion of an edge of each tooth of the second teeth contains completely the functional part of said edge of each tooth of the second teeth.

Fig. 1

Fig 3

Fig. 2B

Fig. 2A

## Fig. 4

## Fig. 5

$$d_1 = \frac{z_1 d}{z_1 + \varepsilon\, z_2}$$

Fig. 6

Fig. 7

**Fig. 8A**

**Fig. 8B**

**Fig. 8C**

Fig. 9

Fig. 11

Fig. 10A

Fig. 10B

Fig. 10C

Fig. 12A

Fig. 12B